# EUROPEAN PATENT APPLICATION

(11) **EP 1 695 859 A1**
(43) Date of publication of application: **30.08.2006**
(21) Application number: 05004000.5
(22) Date of filing: 23.02.2005
(51) Int. Cl.: B60K 31/00, B60K 26/02

(54) **An adaptive cruise control (ACC) system**

(71) Applicant: ROBERT BOSCH GMBH, 70442 Stuttgart (DE)
(72) Inventor: Michi, Harald, 75248 Oelbronn-Duerrn (DE); Lichtermann, Jan, 71739 Oberriexingen (DE); Kustosch, Mario, 71665 Vaihingen/Enz (DE); Hoetzer, Dieter, 71706 Markgroeningen (DE)

(57) **Abstract**

The invention discloses an Adaptive Cruise Control (ACC) system for automobiles that provides a haptic gas pedal (11) capable of exerting an adjustable restoring or reversing force (F_{P}) on the gas pedal (11) actuated by electronic control unit (3) of the ACC to guide the driver of the vehicle in the acceleration process to gain optimum speed depending on the traffic situation in the driving lane as sensed by the sensor(s) (1) of the ACC. The invention also provides for a haptic brake pedal (11) capable of exerting sufficient restoring or reversing force (F_{P}) on brake pedal at the standstill position to desist the driver from pressing the brake pedal (11) that switch the ACC from active to passive mode at the standstill position and thereby prevent rolling of the vehicle in this position on release of the brake pedal (11).

## Description

### Field of Invention

The present invention relates to an improved Adaptive Cruise Control (ACC) system for automobiles that ensure driving safety by preventing unintentional rolling from standstill position with the use of a haptic brake pedal and allows a guided drive-off and speed control with the use of a haptic accelerator pedal.

### Description of the Related art

ACC is similar to conventional cruise control in that it maintains vehicles pre-set speed. However, unlike conventional cruise control adaptive system can automatically adjust the vehicle speed in order to maintain proper distance with the vehicle in front in the same lane. The adaptive cruise control, uses a forward looking radar, usually installed behind the grill of the vehicle to detect the speed and distance of the vehicle ahead of it. The objective of the system is achieved through a radar headway sensor, digital signal processor and longitudinal controller. If the vehicle in front slows down or if another object is detected the system sends a signal to engine or braking system to decelerate and when the road is clear, the system will re-accelerate the vehicle at set speed.

ACC system that are being developed ensure a longitudinal guide of a vehicle even in a lower velocity range till it comes to stand still. At the standstill it is extremely important that an unintended rolling of the vehicle by the driver and/or the ACC system is avoided. A conventional ACC system normally switches from "active" to "passive" mode by pressing the brake pedal. As a result the active pressure applied on the brake by the ACC system is withdrawn. The vehicles starts rolling as soon as the driver releases the brake pedal.

ACC system available in the near future will be capable of automatic or an automated start-up. In case of automatic start-up the ACC system decide itself when active pressure applied on the brake by the ACC system is to be released and when the car has to accelerate and its dynamics. Thus in case of an automatic start-up it is the ACC system that decides the drive-off without the intervention of the driver.

However, the situation is otherwise in case of automated start-up ACC system that waits for the start-up release from the driver. The driver release can be implemented in different ways like voice command, press button, activating gas pedal etc. of which the accelerating the gas pedal is a most natural form of driver release.

Further, in the automated start-up system, the active pressure applied on the brake by ACC system has to be kept to prevent the vehicle from rolling from the standstill position. The automated start-up system is thus fraught with the risk of rolling of vehicle on accidental operation and release of the brake pedal from the standstill position as the ACC switches to "passive" mode on application of brake, which is activated only on pressing the gas pedal.

The present invention provides a solution to this problem by using haptic pedals with the automated start-up system. The automated start-up ACC system according to the present invention helps to maintain an "active" ACC for standstill with the brake pressure locked and to prevent switch off to "passive" mode, while constantly watching the surroundings for a start-up. So long relevant objects continues to be present in the driving lane, it sends this information to the driver and the control system sets maximum restoring force to the gas pedal thereby signalling not to accelerate the vehicle. The information is normally conveyed to the driver in atleast two different channels of which one is haptic and other may be graphic and/or acoustic. The haptic channel helps to influence the attentiveness / alertness of the driver. In case ACC ascertains that a start-up is possible, the driver is informed about this, normally by means of a acoustic signal to which the driver responds by accelerating while ACC systems also withdraws its restoring force on the gas pedal to inform the driver to accelerate. Since the ACC system is aware of the optimum acceleration at which the vehicle driving in front to be followed, it can always tell the driver by decreasing, stopping or increasing the restoring force on the gas pedal through its electronic control mechanism, while the driver is accelerating too little, just right or too much. In case ACC finds that a minimum distance between the two vehicles , for example as prescribed by the law will not be maintained, the ACC system also helps to maintain that by stepwise increase of the restoring force on the gas pedal that may be accompanied by vibration of the gas pedal to further alert the driver. The driver immediately perceives the increased resistance or vibration of the gas pedal and appreciates the relation between the distance and feel of the pedal. In this way a safe start-up can be ensured and the driver can be lead intuitively by ACC system for the drive-off and to gain the optimum acceleration after a brief adaption time.

In the "active" standstill mode of the ACC system for the automated start-up according to the invention the brake pressure is kept locked and as long any object continues to be present in the driving lane maximum possible restoring force applied by the ACC system to the brake pedal thereby preventing switch off to the "passive" mode by pressing of brake pedal which is resisted by large reversing force.

ACC system with automatic start-up system is a costly proposition and needs plurality of far range sensors to ensure safety of drive - off. The system needs several sensors or special sensors of far and wide range. The system requirements are quite costly. Automatic drive-off is possible only with such high power sensors on board. The system in the automatic start-up controls the brake pressure and the engine itself without driver's intervention.

ACC system with automated start-up is a low cost alternative to ACC system with automatic start-up, when the former is used in conjunction with haptic pedals according to the present invention and helps the driver to a safe drive-off through appropriate signals sent by the ACC system to the driver through haptic pedals. In the automated system the driver has to press gas pedal for the drive-off and to gain speed but he is guided by the ACC system through the reverse controlling force of the gas pedal.

The adaptive cruise control system of the present invention provides an increased traffic safety through the interplay of adaptive cruise control and the haptic accelerator pedal. The vehicle driver gets an increased subjective safety feeling while driving the vehicle on the road. The driver can also directly perceive the adaptive relationship between the restoring force of the accelerator pedal and the external factors, for example, the distance of the vehicle travelling ahead. No additional measuring devices are necessary with this improved adaptive cruise control system. Furthermore, the present invention is operable on multiple road conditions and in multiple weather conditions.

### Objects of the Invention

The first objective of the invention is to provide a low cost ACC system for automobile with automated start-up that ensure driver's safety at the drive-off.

The second objective of the invention is to avoid the use of costly sensors required for an ACC system with automatic start-up without compromising the safety at the drive-off and standstill by use of haptic pedals actuated by the ACC system.

The third objective of the invention is to provide an automated start-up ACC system that helps to prevent rolling of the vehicle at standstill by unintended operation of the brake pedal.

The fourth object of the invention is to provide a low cost automated ACC system that guides the driver to gain the optimum acceleration or to decelerate as required to keep minimum safe distance from the vehicle in front of it.

The fifth object of the invention is to caution the driver in advance through vibration of the haptic gas pedal optionally with other visual or acoustic signals whenever there is a threat of breaching the minimum safe distance from the preceding vehicle in the lane.

Another object of the invention to provide an increased subjective safety feeling to the driver of the vehicle.

These and other objects of the invention will be further clear to a person in the art on further reading of the description that follows.

### Summary of the Invention

The present invention provides for a ACC system for automobiles with automated start-up wherein at the vehicle standstill position, the ACC system transmits signals for applying restoring force both at the gas pedal and also at the brake pedal till the sensor(s) of ACC system finds that the obstacle in front of the vehicle has moved for allowing a start-up so that the driver can be alerted against either acceleration for a situation that does not warrant a drive-off or to press brake pedal to switch off the ACC system from the "active" to "passive" mode that may cause rolling of the vehicle on release of the gas pedal.

The invention further provides an ACC system that guides the driver of the vehicle for a drive-off as and when the obstacle in front of the vehicle has moved by sending the haptic signal through the gas pedal that releases the restoring or reversing force applied by ACC system at standstill while unlocking the brake pressure.

The invention also provides for a ACC system that guides the driver of a vehicle depending on the location of the vehicles ahead in the driving lane and to maintain the safe minimum distant from the vehicle in front of it, by use of controlled restoring force on the gas pedal actuated by the system depending on the situation in the driving lane as sensed by its sensor(s).
The invention further provides means to alert the driver through visual, acoustic and mechanical means including vibrating action on the gas pedal whenever there is threat of breach of the minimum safe distance from the vehicle ahead in the driving lane.

### Brief Description of the Drawings

Fig.1 is a system block diagram showing a configuration of the improved adaptive cruise control system according to one embodiment of the present invention.

Fig.2 is a flow chart of the mode of operation and microprocessor controlled ACC system of the invention to gain optimum speed.

Fig. 3 is a chart showing maximum and minimum adjustable restoring force for gas pedal at different position.

Fig. 4 is a chart for maximum and minimum adjustable restoring force for brake pedal at different position.

### Detailed Description of the Invention

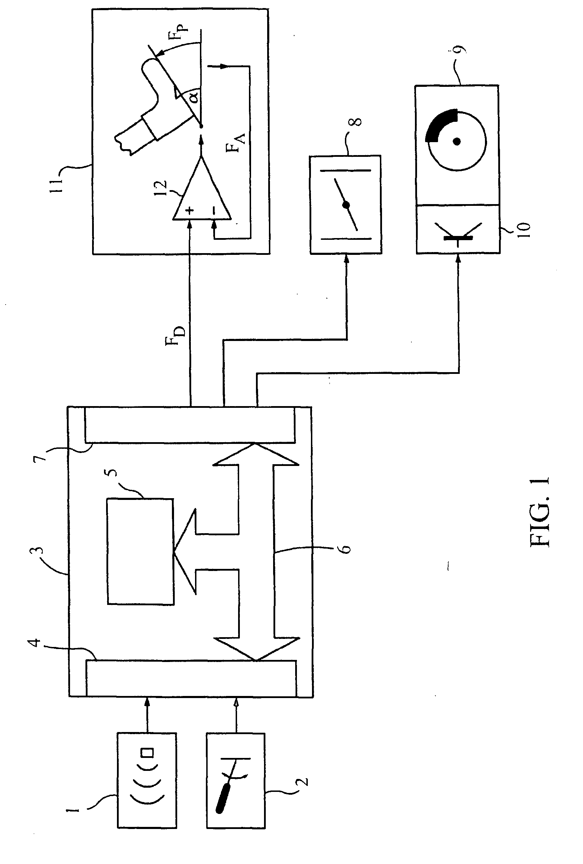

The mode of operation of the ACC system according to one embodiment of the present invention is given in Fig.1. The improved ACC system of the present invention comprises a distant sensor device (1) such as an ACC sensor with radar ; a driver operable control system (2) for adjustment of control parameters ; a distance and speed controller i.e ACC system Electronic Control Unit (ECU) (3) ; a driving control device (8) for achieving the set parameters through a solenoid controlled butterfly valve controlling the injection of fuel as determined by a memory unit and signalled by the ACC system ECU ; a deceleration or brake mechanism (9) for stopping or reducing the speed of the vehicle; an electrically controllable brake booster (10) connected to the output circuit (7) of the ACC system ECU and a haptic pedal system (11) coupled with a means (12) for controlling the restoring force on the pedal as guided by the ACC system ECU.

The said ACC system ECU (3) is equipped with its usual input circuit (4) a computation unit (5) comprising a microprocessor or a signal processor, a data exchange system controller (6) made of an internal bus system and an output circuit (7), besides a memory unit (not shown ) to store the inputs for the control parameters like desired speed of host vehicle and minimum distance to be maintained from the preceding vehicle.

The distance sensor device (1) and the driver operable control system (2) for adjustment of control parameters are both in electrical communication with the input circuit (4) of the ACC system ECU. Similarly the controlling means (12) for the haptic pedal, driving control device (8) and the brake booster (10) are in electrical communication with output circuit (7) of the ACC system ECU (3). In the haptic pedal system F_{D} and F_{A} represent the desired and actual values respectively of the force applied on the pedal and F_{P} is the restoring force on the pedal that is actuated by the system whereas ∝ is the deflection angle of the haptic pedal.

After the vehicle is brought to a standstill position the radar sensor (1) keeps a constant watch on the vehicle or other object in front of the host vehicle that has caused the vehicle to stop and so long the traffic situation does not permit the movement of the host vehicle as sensed by the same sensor it sends signal to the ACC system ECU (3) to output maximum restoring force (F_{P}) to the gas pedal through the gas pedal controlling unit. A similar restoring force is also applied to the brake pedal through a separate brake pedal control unit (not shown in Fig. 1 ) simultaneously by the ACC system ECU to prevent the driver to press the brake pedal by a deflection angle ( ∝ ) sufficient to switch off the ACC system from "active" to "passive" mode. In this way the improved ACC system of the present invention prevents rolling of the vehicle through accidental release of the brake pedal by the driver at this position as the brake system is kept locked by the ACC system ECU in "active" mode till the vehicle is in a condition to move out.

As and when the host vehicle is in a position to move out as sensed by the sensor (1) it signals for withdrawal of restoring force both on the gas and brake pedal through the ACC system ECU with simultaneous unlocking of the brake by withdrawing the brake booster (8) action so that the vehicle is ready to move the moment the driver presses the gas pedal. The driver may be simultaneously signalled to make a move through visual and/or acoustic signals.

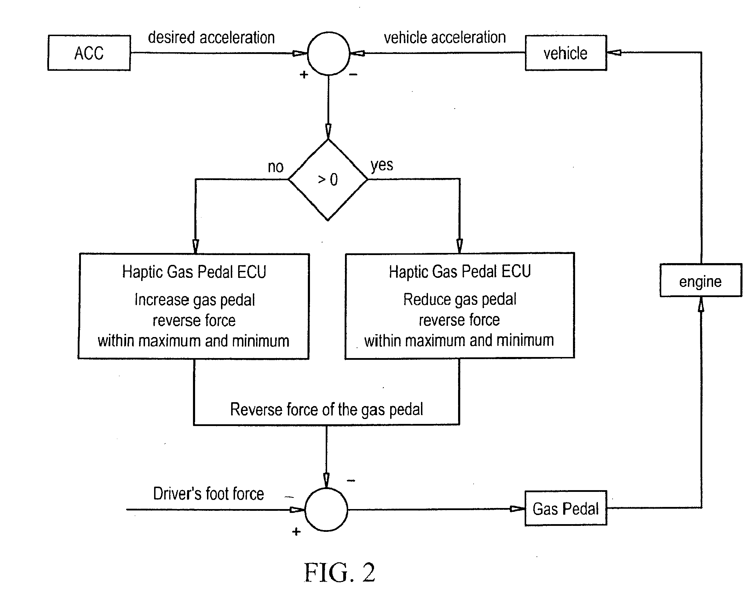

Once the vehicle is on the move the ACC system according to the present invention guides the driver to attain the set speed by stepwise release of the restoring force on the gas pedal as shown in Fig.2. The ACC system ECU constantly monitors the actual speed of the vehicle and the desired speed within the set limit depending on the speed of the preceding vehicle and thus helps to gain the optimum speed in one hand and also to keep safe distance on the other. If the actual speed is lower than the desired speed the restoring force on the gas pedal is reduced stepwise till they are equal. Similarly if the actual speed is higher than the desired speed the restoring force of the gas pedal is increased stepwise till they are equal.

The improved ACC system of the present invention additionally provides for an automatic safety mechanism by which the driver is timely alerted the moment there is threat of breaching the safe distance from the preceding vehicle through vibration of the gas pedal that may be accompanied with other visual or acoustic signals.

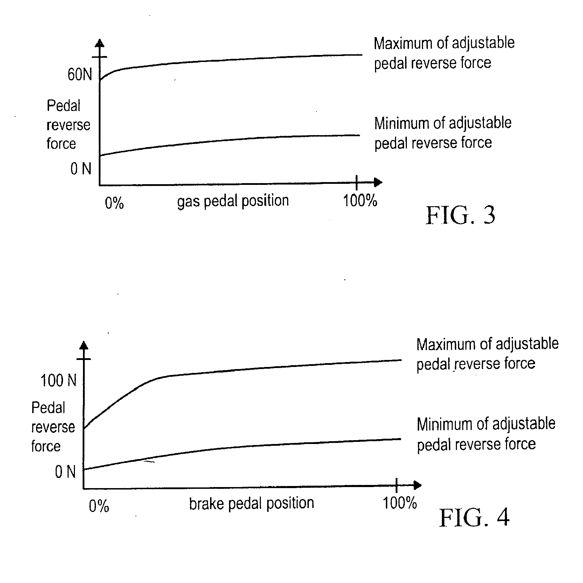

Figs 3 and 4 gives graphical representations of the position of the gas and brake pedals respectively with variation of the restoring forces on these pedals through the electronic control unit of the ACC of the present invention.

### Utility and Industrial Applicability

The adaptive cruise control system of the invention can be used in automobile industry. The ACC system according to the present invention can be used in all classes of automobile vehicles and provides driving comfort, safety and helps to increase the subjective feeling of safety to the driver.

It will be apparent to a person in the art, that many variation or alteration of the system is possible using the principle of the invention as disclosed. Therefore, the above description is not intended to be limiting but only illustrative. It is the intention of the present disclosure to embrace all such variations and alterations as may be possible within the spirit and broad scope of the appended claims.

## Claims

1. An improved automated Adaptive Cruise Control (ACC) system for automobiles **characterized in that** it comprises a haptic gas pedal capable of exerting an adjustable restoring ( reversing ) force on the gas pedal when actuated by the electronic control unit of ACC to guide the driver of the vehicle to accelerate the vehicle to the extent needed and gain the optimum speed depending on the traffic situation in the driving lane as sensed by the sensor(s) of the ACC.

2. The ACC system as claimed in claim 1, further **characterized in that** it comprises a haptic brake pedal capable of exerting sufficient restoring (reversing) force on brake pedal when actuated by the ACC electronic control unit to desist the driver from pressing the brake pedal at the vehicle standstill position and thereby switching the ACC system from "active" to "passive" mode that might cause rolling of the vehicle on release of the brake pedal, while the brake is kept actively locked by the ACC system till the vehicle is in a condition for a drive-off.

3. The ACC system as claimed in claim 1 or 2, further **characterized in that** it comprises sensor(s) that guide the driver for a drive-off from the stand-still position as and when the object or vehicle in front of it moves out as sensed by the sensor(s) by suitably adjusting the restoring (reversing) force on the gas pedal and releasing the brake lock.

4. The ACC system as claimed in claim 3, further **characterized in that** it comprises means for providing visual and/or a acoustic signal(s) in addition to the haptic signal through gas pedal for a drive-off.

5. The ACC system as claimed in claim 1, further **characterized in that** said sensor system of the ACC is adapted to keep a continuous watch on other vehicles ahead of the car and their speed and guide the driver to accelerate or decelerate or continue at the current speed by decreasing, increasing or stopping the restoring force in the haptic gas pedal by correspondingly actuating the haptic gas pedal unit through its electronic control unit.

6. The ACC system as claimed in claim 5, further **characterized in that** the electronic control unit has means to send signal for acceleration or deceleration of the vehicle through haptic gas pedal for gaining the desired speed by adjusting the restoring force on the gas pedal in a stagewise manner instead of doing so in one stroke.

7. The ACC system as claimed in claim 6, further **characterized in that** it comprises visual and/or acoustic and/or mechanical means to alert the driver of the vehicle to accelerate or decelerate to gain optimum speed in the drive lane situation while keeping safe distance from the vehicle in front of it apart from the haptic signal through gas pedal.

8. The ACC system as claimed in claim 7, wherein said means for alerting the driver other than the haptic signal through gas pedal is a means for causing vibrating action on the gas pedal whenever there is a threat of breaching the minimum safe distance from the preceding vehicle.
